# EUROPEAN PATENT APPLICATION

(11) **EP 4 465 176 A1**
(43) Date of publication of application: **20.11.2024**
(21) Application number: 23213261.3
(22) Date of filing: 30.11.2023
(51) Int. Cl.: G06F 9/48, G06F 9/445, G06F 9/54

(54) **ORCHESTRATION INSTRUCTION MANAGEMENT METHOD AND APPARATUS, ELECTRONIC DEVICE, AND STORAGE MEDIUM**

(30) Priority: 19.05.2023 CN 202310570237
(71) Applicant: Chongqing Changan Automobile Co., Ltd., Chongqing 400023 (CN)
(72) Inventor: Gan, Guochao, Chongqing 400023 (CN)
(74) Representative: Patentanwaltskanzlei Matschnig & Forsthuber OG

(57) **Abstract**

An orchestration instruction management method and apparatus, an electronic device, and a storage medium are provided. In the method, service information of a target head unit is obtained, and a service execution time sequence and an incoming parameter are determined. Then, the service execution time sequence and the incoming parameter are encoded according to a preset instruction orchestration protocol, to generate an orchestration instruction in a fixed information arrangement mode. The orchestration instruction is transmitted to an embedded platform based on a preset orchestration instruction interface, and is decoded to perform service execution according to the orchestration instruction. In the method, the orchestration information is generated for the service information of the target head unit based on a specific sequence and an orchestration protocol, to replace original head unit system control information in different forms under a plurality of protocols with a unified instruction form. An instruction type is limited, so that temporary communication between a head unit system and the embedded platform is avoided. Service execution is performed according to the orchestration instruction, so that a time difference brought by communication can be eliminated, and a problem that real-time performance and synchronicity cannot be met in a service execution process of the head unit is effectively solved.

## Description

### Field of the Invention

The present application relates to the field of instruction management of head units, and in particular, to an orchestration instruction management method and apparatus, an electronic device, and a storage medium.

### Background of the Invention

Vehicle function as a service is currently a hot area in the automotive industry. Capabilities of a vehicle are abstracted to independent service modules that implement development of functional scenes through combined orchestration. Sensing and execution services of the vehicle usually deployed on an in-vehicle embedded platform, for example, a body domain controller. A user operation oriented platform relies on a head unit system, and a user or scene related technical person may operate a basic service with a simple user interface (UI) to define a functional scene. After receiving service orchestration information, the head unit system converts the service orchestration information into service execution invoking information, and invokes service execution on the in-vehicle embedded platform in a cross-domain manner through an in-vehicle communication network.

However, a problem that needs to be faced in an actual service execution process is that when the in-vehicle embedded platform receives a service invoking command delivered by the head unit system, there is a communication delay, and if the in-vehicle embedded platform is off, the head unit system needs to be awaited to be powered on, which usually takes a long time and cannot meet a requirement of the head unit system on real-time performance of service execution. In addition, service invoking commands delivered by the head unit system are executed in order, which causes a time difference between operations, and the operations need to be highly coordinated to achieve good effects. The time difference may greatly reduce the effects and synchronicity of service execution.

### Summary of the Invention

An objective of embodiments of the present disclosure is to provide an orchestration instruction management method and apparatus, an electronic device, and a storage medium, to solve a problem that real-time performance and synchronicity cannot be met in an existing service execution process of a head unit.

The present disclosure provides an orchestration instruction management method. The orchestration instruction management method includes: obtaining service information of a target head unit, and determining a service execution time sequence and an incoming parameter based on the service information; encoding the service execution time sequence and the incoming parameter according to a preset instruction orchestration protocol, to generate an orchestration instruction in a fixed information arrangement mode; and transmitting the orchestration instruction to an embedded platform based on a preset orchestration instruction interface, and decoding the orchestration instruction to perform service execution according to the orchestration instruction.

In an embodiment of the present disclosure, after the transmitting the orchestration instruction to an embedded platform based on a preset orchestration instruction interface, the orchestration instruction management method further includes: checking the orchestration instruction according to the preset instruction orchestration protocol; and if a format of the orchestration instruction is incorrect, generating error information based on the fact that the format of the orchestration instruction is incorrect, and correcting the orchestration instruction based on the error information.

In an embodiment of the present disclosure, after the checking the orchestration instruction according to the preset instruction orchestration protocol, the orchestration instruction management method further includes: if the format of the orchestration instruction is correct, determining a type of the orchestration instruction, the type of the orchestration instruction including a real-time instruction, a permanent instruction, and a time-limited instruction; and if the type of the orchestration instruction is the real-time instruction, performing service execution according to the orchestration instruction; or if the type of the orchestration instruction is the permanent instruction or the time-limited instruction, storing the orchestration instruction to a preset orchestration instruction storage partition, to invoke and execute the permanent instruction or the time-limited instruction based on an execution condition.

In an embodiment of the present disclosure, invoking and executing the permanent instruction or the time-limited instruction based on the execution condition includes: if the orchestration instruction is the permanent instruction, determining a trigger condition of the orchestration instruction according to the preset instruction orchestration protocol and the orchestration instruction; and reading the orchestration instruction in response to the trigger condition, and performing service execution according to the orchestration instruction.

In an embodiment of the present disclosure, invoking and executing the permanent instruction or the time-limited instruction based on the execution condition further includes: if the orchestration instruction is the time-limited instruction, determining a trigger condition and expiration time of the orchestration instruction according to the preset instruction orchestration protocol and the orchestration instruction; reading the orchestration instruction in response to the trigger condition, and performing service execution according to the orchestration instruction; and if current time is consistent with the expiration time, deleting the orchestration instruction from the preset orchestration instruction storage partition.

In an embodiment of the present disclosure, the encoding the service execution time sequence and the incoming parameter according to a preset instruction orchestration protocol, to generate an orchestration instruction in a fixed information arrangement mode includes: determining a service execution parameter type included in the incoming parameter; determining a type of the orchestration instruction based on the service execution parameter type, and determining an instruction number of the orchestration instruction based on the service execution time sequence; and performing orchestration instruction encoding on the instruction number, the incoming parameter, and the type of the orchestration instruction according to the preset instruction orchestration protocol, to obtain the orchestration instruction in the fixed information arrangement mode.

In an embodiment of the present disclosure, the service execution parameter type includes a trigger condition parameter, an expiration date parameter, and an execution content parameter. The determining a type of the orchestration instruction based on the service execution parameter type includes any one of the following: if the service execution parameter type includes the execution content parameter, determining that the type of the orchestration instruction is a real-time instruction; if the service execution parameter type includes the execution content parameter and the trigger condition parameter, determining that the orchestration instruction is a permanent instruction; or if the service execution parameter type includes the trigger condition parameter, the expiration date parameter, and the execution content parameter, determining that the orchestration instruction is a real-time instruction.

In an embodiment of the present disclosure, after the performing orchestration instruction encoding on the instruction number, the incoming parameter, and the type of the orchestration instruction according to the preset instruction orchestration protocol, to obtain the orchestration instruction in the fixed information arrangement mode, the orchestration management method further includes: if there are a plurality of orchestration instructions, determining a current instruction length of the orchestration instruction; and determining a byte length difference between the current instruction length and an expected instruction length, and performing byte stuffing on the orchestration instruction based on the byte length difference by using a preset stuffing byte, to make the orchestration instructions consistent in instruction length, the preset stuffing byte being byte data of no executive meaning and being used for stuffing the orchestration instruction, and the expected instruction length being greater than or equal to the current instruction length.

An embodiment of the present disclosure further provides an orchestration instruction management apparatus. The orchestration instruction management apparatus includes: an instruction information obtaining module, configured to obtain service information of a target head unit, and determine a service execution time sequence and an incoming parameter based on the service information; an instruction generation module, configured to encode the service execution time sequence and the incoming parameter according to a preset instruction orchestration protocol, to generate an orchestration instruction in a fixed information arrangement mode; and an instruction execution module, configured to transmit the orchestration instruction to an embedded platform based on a preset orchestration instruction interface, and decode the orchestration instruction to perform service execution according to the orchestration instruction.

An embodiment of the present disclosure further provides an electronic device, including: one or more processors; and a storage apparatus, configured to store one or more programs. When the one or more programs are executed by the one or more processors, the electronic device is enabled to implement the orchestration instruction management method according to any one of the foregoing embodiments.

An embodiment of the present disclosure further provides a computer-readable storage medium. Computer-readable instructions are stored on the computer-readable storage medium. When the computer-readable instructions are executed by a processor of a computer, the computer is enabled to perform the orchestration instruction management method according to any one of the foregoing embodiments.

The embodiments of the present disclosure provide the orchestration instruction management method and apparatus, the electronic device, and the storage medium. In the method, the service information of the target head unit is obtained, and the service execution time sequence and the incoming parameter are determined. Then, the service execution time sequence and the incoming parameter are encoded according to the preset instruction orchestration protocol, to generate the orchestration instruction in the fixed information arrangement mode. The orchestration instruction is transmitted to the embedded platform based on the preset orchestration instruction interface, and is decoded to perform service execution according to the orchestration instruction. In the method, the orchestration information is generated for the service information of the target head unit based on a specific sequence and an orchestration protocol, to replace original head unit system control information in different forms under a plurality of protocols with a unified instruction form. An instruction type is limited, so that temporary communication between a head unit system and the embedded platform is avoided. Service execution is performed according to the orchestration instruction, so that a time difference brought by communication can be eliminated, and a problem that real-time performance and synchronicity cannot be met in a service execution process of the head unit is effectively solved.

It should be understood that the foregoing general descriptions and the following detailed descriptions are merely illustrative and explanative, and do not constitute any limitation on the present application.

### Brief Description of the Drawings

The accompanying drawings, which are incorporated in and constitute a part of this specification, illustrate embodiments consistent with the present application and, together with the specification, serve to explain the principle of the present application. Apparently, the accompanying drawings in the following description merely show some embodiments of the present application, and a person of ordinary skill in the art can derive other accompanying drawings from these accompanying drawings without creative efforts. In the drawings:
Fig. 1 is a schematic diagram of an exemplary system architecture according to an exemplary embodiment of the present application;
Fig. 2 is a flowchart of an orchestration instruction management method according to an exemplary embodiment of the present application;
Fig. 3 is a flowchart of an orchestration instruction generation method according to an exemplary embodiment of the present application;
Fig. 4 is a schematic diagram of a specific orchestration instruction management system architecture according to an exemplary embodiment of the present application;
Fig. 5 is a schematic diagram of a composition of a specific orchestration instruction with a fixed number of bytes according to an exemplary embodiment of the present application;
Fig. 6 is a flowchart of a specific non-real-time instruction execution method according to an exemplary embodiment of the present application;
Fig. 7 is a schematic diagram of an orchestration instruction management apparatus according to an exemplary embodiment of the present application; and
Fig. 8 is a schematic diagram of a structure of a computer system of an electronic device according to an exemplary embodiment of the present application.

### Detailed Description of the Embodiments

The following describes implementations of the present disclosure with reference to the accompanying drawings and specific embodiments. A person skilled in the art may easily learn other advantages and effects of the present disclosure based on content disclosed in this specification. The present disclosure may further be implemented or applied with other different specific implementations. Various modifications or variations may further be made to details in this specification based on different points of view and applications without departing from the spirit of the present disclosure. It should be understood that preferred embodiments are merely intended to illustrate the present disclosure but not to limit the protection scope of the present disclosure.

It should be noted that the drawings provided in the following embodiments merely schematically describe the basic concept of the present disclosure. Therefore, the drawings show only components related to the present disclosure, but are not drawn based on the number, a shape, and a size of a component during actual implementation. During actual implementation, a form, the number, and a scale of each component can change freely, and a layout form of the component may also be more complex.

Plenty of details are discussed in the following description, to provide more thorough explanations about the embodiments of the present disclosure. However, it is clear that a person skilled in the art can implement the embodiments of the present disclosure without these specific details. In another embodiment, a known structure and equipment are shown in a form of a block diagram rather than details, to make the embodiments of the present disclosure easy to understand.

The term "and/or" mentioned in the present application describes an association relationship between associated objects and represents that three relationships may exist. For example, A and/or B may represent the following three cases: only A exists, both A and B exist, and only B exists. The character "/" generally indicates an "or" relationship between the associated objects.

It should be first noted that an orchestration instruction (orchestration) implements a complex automatic process by defining and coordinating an execution sequence and a process of a plurality of tasks or operations in a system or an application. The orchestration instruction may be implemented by writing a script and using a special orchestration tool or platform. The orchestration instruction may help automatically process and manage various tasks and operations, including application deployment, network configuration, data center automation, container orchestration, and the like. With the orchestration instruction, efficiency can be improved in a large-scale environment, manual errors can be reduced, reliability can be improved, and management costs can be reduced. The orchestration instruction usually includes a definition, an execution sequence, a condition, a dependency, and other information of the task. The orchestration instruction tool may further provide functions of task scheduling, error processing, monitoring, logging, and the like, to support execution and management of the complex automatic process.

An in-vehicle embedded platform is an embedded system installed in a vehicle, and usually includes hardware and software. The system is mainly for controlling various systems of the vehicle, for example, engine management, vehicle stability control, or an infotainment system. The hardware of the in-vehicle embedded platform usually includes a central processing unit (CPU), an internal memory, a memory, an input/output interface, and the like. The software part includes an operating system, an application, a driver, and the like. The entire system including the software and the hardware may control and manage various systems of the vehicle through the in-vehicle embedded platform, to improve performance and safety of the vehicle and user experience. At present, some in-vehicle embedded platforms already have advanced functions of multimedia playback, navigation, intelligence voice recognition, automatic driving, and the like.

The present application may further have the following beneficial effects. The orchestration instruction is written in a fixed information arrangement mode, so that parsing and reading of orchestration content according to a preset instruction protocol are facilitated, and orchestration instruction reading efficiency is improved. The generated orchestration instruction is further checked according to the preset instruction orchestration protocol, so that errors of the orchestration instruction are effectively reduced. The orchestration instruction is classified as a real-time instruction, a permanent instruction, and a time-limited instruction, so that different service execution and instruction implementation under a cyclic execution requirement can be implemented. Orchestration instruction length control is performed on the orchestration instruction in the fixed information arrangement mode based on a preset stuffing byte, to make the orchestration instruction with a fixed length, and the orchestration instruction may be read according to the same preset instruction protocol on the premise of a fixed length and a fixed sequence, so that management and checking of the orchestration instruction are facilitated, and the reading efficiency can be improved.

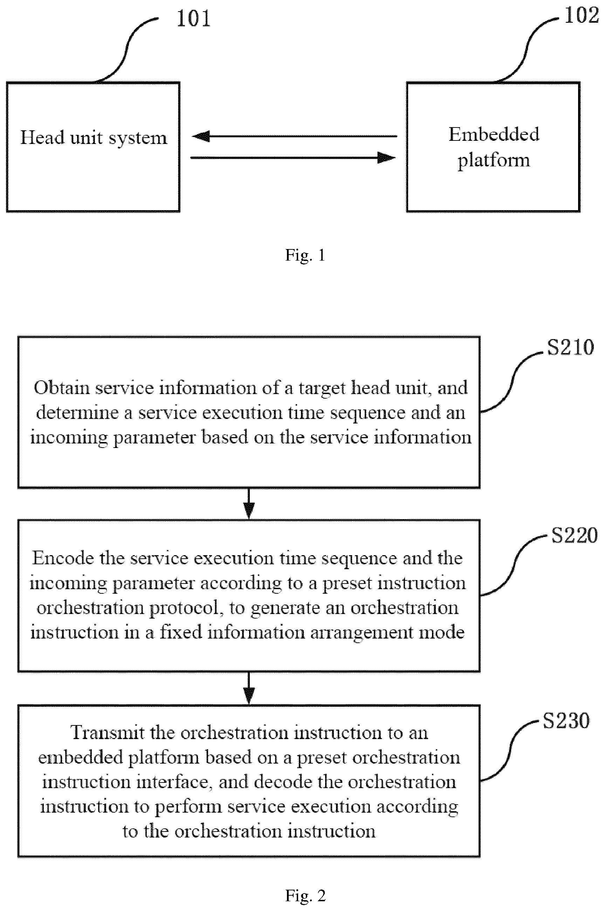

Fig. 1 is a schematic diagram of an exemplary system architecture according to an exemplary embodiment of the present application.

As shown in Fig. 1, the system architecture may include a head unit system 101 and an embedded platform 102. The head unit system 101 includes but is not limited to an orchestration instruction generation module and an orchestration instruction management module. The embedded platform 102 includes but is not limited to an orchestration instruction transceiver module, an orchestration instruction management module, an orchestration instruction parsing module, and an orchestration instruction execution module. After obtaining service information of a target head unit from the head unit system 101, determining a service execution time sequence and an incoming parameter based on the service information, and encoding the service execution time sequence and the incoming parameter according to a preset instruction orchestration protocol, to generate an orchestration instruction in a fixed information arrangement mode, a related technical person may transmit the orchestration instruction to the embedded platform 102 based on a preset orchestration instruction interface, and decode the orchestration instruction to perform service execution according to the orchestration instruction.

Schematically, after the service information of the target head unit is obtained from the head unit system 101, the service execution time sequence and the incoming parameter are determined. Then, the service execution time sequence and the incoming parameter are encoded according to the preset instruction orchestration protocol, to generate the orchestration instruction in the fixed information arrangement mode. The orchestration instruction is transmitted to the embedded platform 102 based on the preset orchestration instruction interface, and is decoded to perform service execution according to the orchestration instruction. In the method, the orchestration information is generated for the service information of the target head unit based on a specific sequence and an orchestration protocol, to replace original head unit system control information in different forms under a plurality of protocols with a unified instruction form. An instruction type is limited, so that temporary communication between the head unit system and the embedded platform is avoided. Service execution is performed according to the orchestration instruction, so that a time difference brought by communication can be eliminated, and a problem that real-time performance and synchronicity cannot be met in a service execution process of the head unit is effectively solved.

Fig. 2 is a flowchart of an orchestration instruction management method according to an exemplary embodiment of the present application. The orchestration instruction management method may be performed in the system architecture including the head unit system 101 and the embedded platform 102 shown in Fig. 1. As shown in Fig. 2, the flowchart of the orchestration instruction management method includes at least step S210 to step S230. Details are described as follows.

In step S210, service information of a target head unit is obtained, and a service execution time sequence and an incoming parameter are determined based on the service information.

In an embodiment of the present application, the service information of the target head unit is related information of functional scene execution of a service provided for a customer by a system installed on the head unit to provide various advantages and entertainment functions. The service information includes but is not limited to service execution information of a navigation service, an entertainment service, an intelligent voice service, a remote control service, a security service, a communication service, and a real-time data service. The service execution information is usually information in an execution process of a specific service, including but not limited to service request information, service response information, service invoking information, service log information, service performance indicator information, and the like.

In an embodiment of the present application, the execution time sequence includes execution time information and execution sequence information of the service request information, and is used for ensuring that an execution sequence of an instruction is the same as a service execution sequence required by the head unit system.

In an embodiment of the present application, the incoming parameter is a parameter description about an action required to be performed by the head unit system in a service execution process under a service requirement made by a user, so as to meet a personalized requirement of the user on service execution.

In step S220, the service execution time sequence and the incoming parameter are encoded according to a preset instruction orchestration protocol, to generate an orchestration instruction in a fixed information arrangement mode.

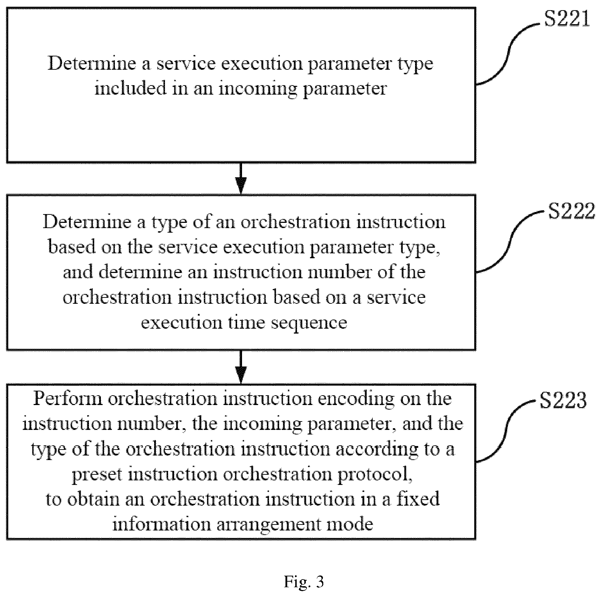

In an embodiment of the present application, that the service execution time sequence and the incoming parameter are encoded according to a preset instruction orchestration protocol, to generate an orchestration instruction in a fixed information arrangement mode may specifically be performed through steps in Fig. 3. Fig. 3 is a flowchart of an orchestration instruction generation method according to an exemplary embodiment of the present application. As shown in Fig. 3, the flowchart of the orchestration instruction generation method includes at least step S221 to step S223. Details are described as follows.

In step S221, a service execution parameter type included in the incoming parameter is determined.

In an embodiment of the present application, the service execution parameter type includes a trigger condition parameter, an expiration date parameter, and an execution content parameter. The service execution parameter type includes different parameter types based on a service execution type. The execution content parameter is a key parameter, and a parameter corresponding to each service execution type includes an execution content parameter. The trigger condition parameter and the expiration date parameter are optional. An inclusion status of the trigger condition parameter and the expiration date parameter is determined after parameter setting is performed based on a service execution requirement. For example, a service execution requirement with a time limit specified includes a trigger condition in execution and an expiration date parameter describing the service execution time limit.

In step S222, a type of the orchestration instruction is determined based on the service execution parameter type, and an instruction number of the orchestration instruction is determined based on the service execution time sequence.

In an embodiment of the present application, an expected sequence for execution of the orchestration instruction may be determined based on the service execution time sequence, and an execution sequence of the orchestration instruction may be numbered based on the expected sequence, to describe the execution sequence of the orchestration instruction. The execution sequence of the orchestration instruction may be numbered with an Arabic numeral, may be numbered with another numeral, letter, or symbol with a sequential representation, or may be numbered according to a preset sequential representation agreement.

In an embodiment of the present application, if the service execution parameter type includes the execution content parameter, the type of the orchestration instruction is a real-time instruction. The real-time instruction is an instruction that is executed immediately after received and that does not have a cyclic execution property.

In an embodiment of the present application, if the service execution parameter type includes the execution content parameter and the trigger condition parameter, the orchestration instruction is a permanent instruction. The permanent instruction is an instruction that is stored after received and executed when a trigger condition of the instruction is reached and that has a cyclic execution property.

In an embodiment of the present application, if the service execution parameter type includes the trigger condition parameter, the expiration date parameter, and the execution content parameter, the orchestration instruction is a time-limited instruction. The time-limited instruction is an instruction that is stored after received and executed when a trigger condition of the instruction is reached but is terminated and deleted from a storage region at the end of a time limit range.

In step S223, orchestration instruction encoding is performed on the instruction number, the incoming parameter, and the type of the orchestration instruction according to the preset instruction orchestration protocol, to obtain the orchestration instruction in the fixed information arrangement mode.

In an embodiment of the present application, in this solution, a specific encoding sequence of performing orchestration instruction encoding on the instruction number, the incoming parameter, and the type of the orchestration instruction according to the preset instruction orchestration protocol includes that a first byte range is used for describing an instruction length, a second byte range is used for describing the instruction number, a third byte range is used for describing the instruction type, a fourth byte range is used for describing the trigger condition parameter when there is the trigger condition parameter, a fifth byte range is used for describing the expiration date parameter when there is the expiration date parameter, and a sixth byte range is used for describing the execution content parameter. The six byte ranges are sorted and encoded in a sequence from the first to the sixth byte ranges. When a specific byte range does not exist, the byte range is deleted from the orchestration instruction, and only a valid byte range remains. In this way, orchestration instructions in the fixed information arrangement mode are obtained for different instruction types. In an embodiment of the present application, the trigger condition is determined by forming a precondition library from a preset precondition, encoding each precondition, and performing information expression by using a code as description content of the trigger condition. For example, the precondition is that the user gets close to a vehicle with a key, and the precondition is numbered as a first precondition. In this case, edited content of the trigger condition is Number 1.

In an embodiment of the present application, based on the foregoing encoding sequence, when the type of the orchestration instruction is the real-time instruction, the orchestration instruction does not include the fourth byte range and the fifth byte range. Therefore, the real-time instruction has four byte ranges that sequentially describe the instruction length, the instruction number, the instruction type, and the execution content.

In an embodiment of the present application, when the type of the orchestration instruction is the permanent instruction, the orchestration instruction does not include the fifth byte range. Therefore, the permanent instruction has five byte ranges that sequentially describe the instruction length, the instruction number, the instruction type, the trigger condition, and the execution content.

In an embodiment of the present application, when the type of the orchestration instruction is the time-limited instruction, the orchestration instruction includes all of the six byte ranges that sequentially describe the instruction length, the instruction number, the instruction type, the trigger condition, an expiration date, and the execution content.

In an embodiment of the present application, for the three instruction types, preset instruction protocols in mapping with the instruction types may be set respectively to read the orchestration instruction, to execute the instruction based on read content.

In an embodiment of the present application, after the orchestration instruction in the fixed information arrangement mode is obtained, if there are a plurality of orchestration instructions, a current instruction length of the orchestration instruction is determined, a byte length difference between the current instruction length and an expected instruction length is determined, and byte stuffing is performed on the orchestration instruction based on the byte length difference by using a preset stuffing byte, to make the orchestration instructions consistent in instruction length. The preset stuffing byte is byte data of no executive meaning, and is used for stuffing the orchestration instruction. The expected instruction length is greater than or equal to the current instruction length.

In an embodiment of the present application, the preset stuffing byte may stuff the orchestration instruction in the fixed information arrangement mode, to control each orchestration instruction to be consistent in length. For example, a total length of a real-time instruction is 80 bytes, a total length of a permanent instruction is 90 bytes, and a total length of a time-limited instruction is 100 bytes. In this case, the preset stuffing byte stuffs the real-time instruction for 20 bytes and stuffs the permanent instruction for 10 bytes, to make the total lengths of the three orchestration instructions all 100 bytes. It should be noted that a specific position needs to be stuffed during stuffing with the preset stuffing byte, for example, the end of content of the orchestration instruction is stuffed, so that an invalid byte can be recognized, and an instruction reading failure can be avoided.

In an embodiment of the present application, after the orchestration instruction is stuffed with the preset stuffing byte, the orchestration instruction has a fixed length, and is in the fixed information arrangement mode. Information of the orchestration instruction arranged in a fixed-length and fixed-sequence manner can be read according to the same preset instruction protocol, so that orchestration instruction reading efficiency is improved. In addition, this solution is an extended implementation solution of the foregoing manner in which the preset instruction protocols in mapping with the instruction types are set respectively to read the orchestration instruction, and the implementability is effectively improved in this solution.

In step S230, the orchestration instruction is transmitted to the embedded platform based on a preset orchestration instruction interface, and the orchestration instruction is decoded to perform service execution according to the orchestration instruction.

In an embodiment of the present application, encoding is a process of converting one information form to another. For example, text information is encoded into a numeral. During information transmission or storage, encoding is usually for reducing a data volume, improving data security, or meeting a specific requirement of data transmission or storage. Decoding is a process of recovering encoded information to original information. For example, a numeral is decoded into text information. The decoding process needs an inverse operation of the encoding process, to ensure consistency between encoding and decoding. In this embodiment of the present application, when orchestration instruction encoding is performed on the instruction number, the incoming parameter, and the type of the orchestration instruction according to the preset instruction orchestration protocol, and the orchestration instruction is decoded, information encoding is performed based on service content and information of a head unit scene module, to form an encoded instruction including a numeral, the encoded instruction is sent, and is decoded by the embedded platform to determine the service information. A decoding and encoding mode includes but is not limited to ASCII encoding, Unicode encoding, and Base64 encoding. The encoding mode is not specifically limited herein.

In an embodiment of the present application, after that the orchestration instruction is transmitted to the embedded platform based on a preset orchestration instruction interface, method further includes that: the orchestration instruction is checked according to the preset instruction orchestration protocol; and if a format of the orchestration instruction is incorrect, error information is generated based on the fact that the format of the orchestration instruction is incorrect, and the orchestration instruction is corrected based on the error information.

In an embodiment of the present application, if the format of the orchestration instruction is correct, a type of the orchestration instruction is determined. The type of the orchestration instruction includes a real-time instruction, a permanent instruction, and a time-limited instruction. If the type of the orchestration instruction is the real-time instruction, service execution is performed according to the orchestration instruction.

In an embodiment of the present application, if the type of the orchestration instruction is the permanent instruction or the time-limited instruction, the orchestration instruction is stored to a preset orchestration instruction storage partition, to invoke and execute the permanent instruction or the time-limited instruction based on an execution condition.

In an embodiment of the present application, the execution condition includes a trigger condition and an expiration date.

In an embodiment of the present application, if the orchestration instruction is the permanent instruction, the trigger condition of the orchestration instruction is determined according to the preset instruction orchestration protocol and the orchestration instruction, the orchestration instruction is read in response to the trigger condition, and service execution is performed according to the orchestration instruction.

In an embodiment of the present application, a precondition library is preset in the embedded platform, to determine, for a number described by the decoded trigger condition, a specific precondition in the precondition library based on a mapping relationship, so that the embedded platform executes the orchestration instruction.

In an embodiment of the present application, if the orchestration instruction is the time-limited instruction, the trigger condition and expiration time of the orchestration instruction are determined according to the preset instruction orchestration protocol and the orchestration instruction, the orchestration instruction is read in response to the trigger condition, service execution is performed according to the orchestration instruction, and if current time is consistent with the expiration time, the orchestration instruction is deleted from the preset orchestration instruction storage partition.

In an embodiment of the present application, after that service execution is performed according to the orchestration instruction, the method further includes that: an execution status of the orchestration instruction is monitored in response to an instruction execution status query request, the execution status including unexecuted, in execution, failing in execution, and successfully executed; and an execution status feedback text is generated based on the execution status, and is displayed on a client.

In an embodiment of the present application, the preset orchestration instruction interface has a plurality of two-way transmission channels, including but not limited to an orchestration instruction receiving and feedback channel, an orchestration instruction management channel, and an orchestration instruction execution result feedback channel.

In an embodiment of the present application, the orchestration instruction receiving and feedback channel is used for sending the orchestration instruction by the head unit system to the embedded platform and performing orchestration instruction reception feedback by the embedded platform to the head unit system. A feedback result includes but is not limited to successful reception, conflicting with an instruction number of an existing orchestration instruction, a format error of the orchestration instruction, the trigger condition not supported, and execution content not supported.

In an embodiment of the present application, in case of successful reception, an orchestration instruction management operation may be performed based on the orchestration instruction management channel, specifically including managing a management status of the orchestration instruction. The successfully received orchestration instruction is labeled in an enabled state by default. Alternatively, disabling and deletion management may be performed on a target orchestration instruction in response to a management request. After the management operation, a management status of the target orchestration instruction after the operation is fed back to the head unit system. The management status includes the enabled state, a disabled state, and a deleted state. The deleted state may alternatively be expressed as a nonexistence state. A specific status expression may be adjusted based on an actual application process of this solution. The specific management status expression is not limited herein.

In an embodiment of the present application, a current execution status of the orchestration instruction is queried in response to the instruction execution status query request, and the execution status is fed back through the orchestration instruction execution result feedback channel.

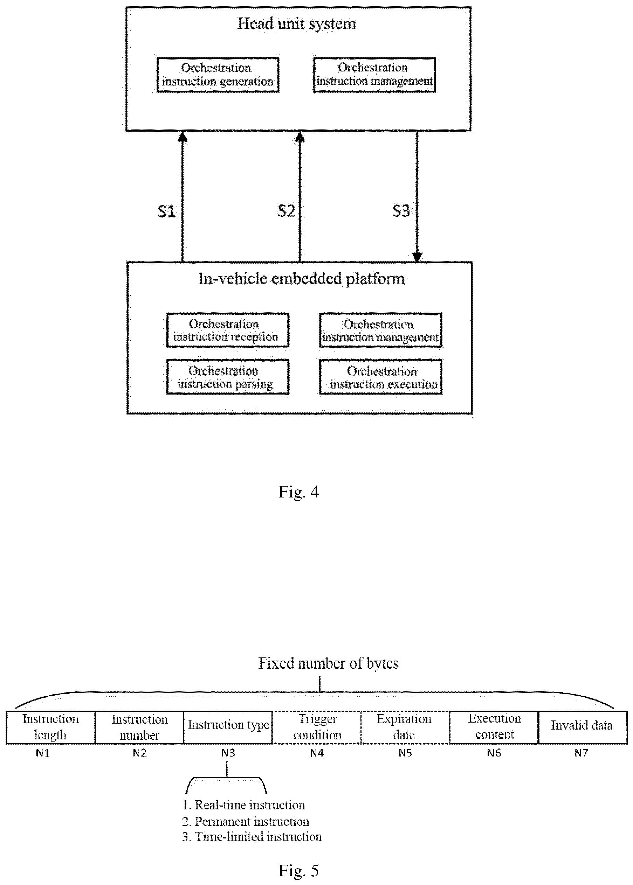

Fig. 4 is a schematic diagram of a specific orchestration instruction management system architecture according to an exemplary embodiment of the present application.

As shown in Fig. 4, in a specific embodiment of the present application, the specific orchestration instruction management system architecture includes a head unit system, an in-vehicle embedded platform, and three interfaces.

In a specific embodiment of the present application, s1 is an orchestration instruction receiving interface, consistent with the orchestration instruction receiving and feedback channel in the foregoing embodiment; s2 is an orchestration instruction management interface, consistent with the orchestration instruction management channel in the foregoing embodiment; and s3 is an orchestration instruction execution result interface, consistent with the orchestration instruction execution result feedback channel in the foregoing embodiment.

In a specific embodiment of the present application, the head unit system specifically includes an orchestration instruction generation module and an orchestration instruction management module. The orchestration instruction generation module is configured to generate an orchestration instruction based on service information. The orchestration instruction management module is configured to perform a management operation on the orchestration instruction based on the interface s2 and the in-vehicle embedded platform.

In a specific embodiment of the present application, the in-vehicle embedded platform includes an orchestration instruction receiving module, an orchestration instruction management module, an orchestration instruction parsing module, and an orchestration instruction execution module. The orchestration instruction receiving module is configured to receive and store the orchestration instruction. The orchestration instruction parsing module is configured to perform a decoding operation on the orchestration instruction, to determine the service information in the orchestration instruction.

Fig. 5 is a schematic diagram of a composition of a specific orchestration instruction with a fixed number of bytes according to an exemplary embodiment of the present application.

As shown in Fig. 5, in a specific embodiment of the present application, a specific arrangement mode of each orchestration instruction includes byte ranges N1 to N7, as shown in Fig. 5. The byte range N1 describes an instruction length. The byte ranges N2 describes an instruction number. The byte range N3 describes an instruction type. The byte range N4 describes a trigger condition. The byte range N5 describes an expiration date. The byte range N6 describes execution content. The byte range N7 describes invalid data. The service information is arranged in the orchestration instruction in a sequence from N1 to N7. The instruction type specifically included in N3 includes a real-time instruction, a permanent instruction, and a time-limited instruction.

In a specific embodiment of the present application, when the instruction type is the real-time instruction, the orchestration instruction does not include information of the two byte ranges N4 and N5, that is, the orchestration instruction does not include information of the byte ranges describing the trigger condition and the expiration date. When the instruction type is the permanent instruction, the orchestration instruction does not include information of the byte range N5, that is, the orchestration instruction does not include information of the byte range describing the expiration date. When the instruction type is the time-limited instruction, the orchestration instruction includes all of the foregoing byte ranges.

In a specific embodiment of the present application, when information of the byte range describing the instruction type is different, a total byte length is not the same, and the orchestration instruction may be stuffed with the invalid data in N7. A number of stuffing bytes is controlled to make the orchestration instruction with a fixed number of bytes, so that reading and parsing of the orchestration instruction are facilitated. It should be noted that the invalid data described in N7 is merely for stuffing a data length of the orchestration instruction, and is of no actual meaning.

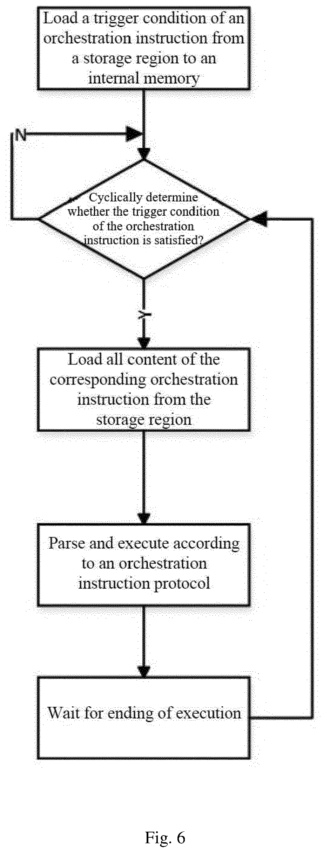

Fig. 6 is a flowchart of a specific non-real-time instruction execution method according to an exemplary embodiment of the present application. A process of the specific non-real-time instruction execution method may be specifically applied to the embedded platform in the system architecture shown in Fig. 1, may be applied to the in-vehicle embedded platform in the orchestration instruction management system architecture shown in Fig. 4, or may be applied to another specific implementation environment capable of implementing this solution. A specific implementation environment is not limited herein.

As shown in Fig. 6, in a specific embodiment of the present application, after receiving an orchestration instruction, the embedded platform stores the orchestration instruction in a storage region. The storage region is consistent with the preset orchestration instruction storage partition in the foregoing embodiment. When a non-real-time instruction is executed, a trigger condition of the orchestration instruction needs to be first loaded from the storage region to an internal memory, and whether the trigger condition of the orchestration instruction is satisfied starts to be cyclically determined. If the trigger condition is not satisfied, a determining process is cyclically performed, to determine a moment at which the trigger condition is satisfied and further perform an instruction execution operation.

In a specific embodiment of the present application, when the trigger condition of the orchestration instruction is satisfied, all content of the corresponding orchestration instruction is loaded from the storage region. The orchestration instruction is parsed according to an orchestration instruction protocol to determine execution content of the instruction. The orchestration instruction starts to be executed based on the execution content. After execution is ended, current execution of the orchestration instruction is completed, and the step of determining whether the trigger condition of the orchestration instruction is satisfied is cyclically performed to execute the orchestration instruction again.

In a specific embodiment of the present application, if the orchestration instruction is a time-limited instruction, before whether the trigger condition of the orchestration instruction is satisfied, whether an expiration date of the time-limited instruction is reached is first determined. If the expiration date is not reached, whether the trigger condition of the orchestration instruction is satisfied is further determined; or if the expiration date is reached, this orchestration instruction execution process is terminated, and the time-limited instruction is deleted from the storage region.

In a specific embodiment of the present application, execution of the real-time instruction specifically includes the following steps: after the real-time instruction is received, the real-time instruction is stored as temporary file content; the real-time instruction is parsed and executed according to an orchestration instruction protocol; and content of the real-time instruction is deleted after execution.

The embodiments of the present disclosure provide the orchestration instruction management method and apparatus, an electronic device, and a storage medium. In the method, the service information of the target head unit is obtained, and the service execution time sequence and the incoming parameter are determined. Then, the service execution time sequence and the incoming parameter are encoded according to the preset instruction orchestration protocol, to generate the orchestration instruction in the fixed information arrangement mode. The orchestration instruction is transmitted to the embedded platform based on the preset orchestration instruction interface, and is decoded to perform service execution according to the orchestration instruction. In the method, the orchestration information is generated for the service information of the target head unit based on a specific sequence and an orchestration protocol, to replace original head unit system control information in different forms under a plurality of protocols with a unified instruction form. An instruction type is limited, so that temporary communication between the head unit system and the embedded platform is avoided. Service execution is performed according to the orchestration instruction, so that a time difference brought by communication can be eliminated, and a problem that real-time performance and synchronicity cannot be met in a service execution process of the head unit is effectively solved. There may be the following beneficial effects. The orchestration instruction is written in the fixed information arrangement mode, so that parsing and reading of orchestration content according to a preset instruction protocol are facilitated, and orchestration instruction reading efficiency is improved. The generated orchestration instruction is further checked according to the preset instruction orchestration protocol, so that errors of the orchestration instruction are effectively reduced. The orchestration instruction is classified as a real-time instruction, a permanent instruction, and a time-limited instruction, so that different service execution and instruction implementation under a cyclic execution requirement can be implemented. Orchestration instruction length control is performed on the orchestration instruction in the fixed information arrangement mode based on the preset stuffing byte, to make the orchestration instruction with a fixed length, and the orchestration instruction may be read according to the same preset instruction protocol on the premise of a fixed length and a fixed sequence, so that management and checking of the orchestration instruction are facilitated, and the reading efficiency can be improved.

The following describes an apparatus embodiment of the present application, which may be used to perform the orchestration instruction management method in the foregoing embodiment of the present application. For details not disclosed in the apparatus embodiment of the present application, refer to the embodiment of the orchestration instruction management method of the present application.

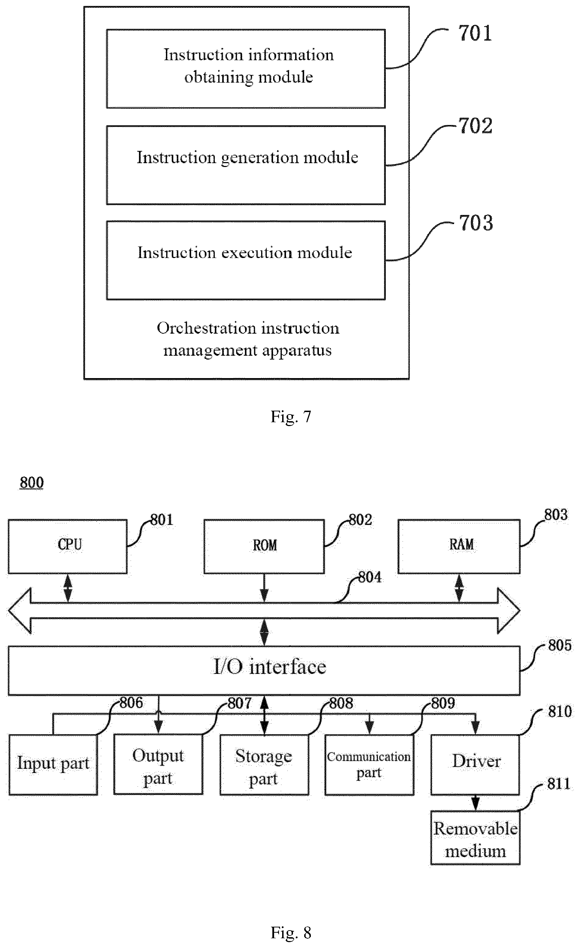

Fig. 7 is a schematic diagram of an orchestration instruction management apparatus according to an exemplary embodiment of the present application. The apparatus may be used in the implementation environment shown in Fig. 2. The apparatus may alternatively be used in another exemplary implementation environment, and is specifically configured in another device. An implementation environment that the apparatus may be used in is not limited in this embodiment.

As shown in Fig. 7, the exemplary orchestration instruction management apparatus includes an instruction information obtaining module 701, an instruction generation module 702, and an instruction execution module 703.

The instruction information obtaining module 701 is configured to obtain service information of a target head unit, and determine a service execution time sequence and an incoming parameter based on the service information. The instruction generation module 702 is configured to encode the service execution time sequence and the incoming parameter according to a preset instruction orchestration protocol, to generate an orchestration instruction in a fixed information arrangement mode. The instruction execution module 703 is configured to transmit the orchestration instruction to an embedded platform based on a preset orchestration instruction interface, and decode the orchestration instruction to perform service execution according to the orchestration instruction.

An embodiment of the present application further provides an electronic device, including: one or more processors; and a storage apparatus, configured to store one or more programs. When the one or more programs are executed by the one or more processors, the electronic device is enabled to implement the orchestration instruction management method provided in each of the foregoing embodiments.

Fig. 8 is a schematic diagram of a structure of a computer system of an electronic device according to an exemplary embodiment of the present application. It should be noted that the computer system 800 of the electronic device in Fig. 8 is merely an example and should not form any limitation on a function and an application scope of the embodiments of the present application.

As shown in Fig. 8, the computer system 800 includes a CPU 801 capable of executing various appropriate actions and processing based on a program stored in a read-only memory (ROM) 802 or a program loaded from a storage part to a random access memory (RAM) 803, for example, executing the method in the foregoing embodiment. The RAM 803 further stores various programs and data needed by system operations. The CPU 801, the ROM 802, and the RAM 803 are connected to one another through a bus. An input/output (I/O) interface 805 is also connected to the bus 804.

The following components are connected to the I/O interface 805: an input part 806 including a keyboard, a mouse, and the like; an output part 807 including a cathode-ray tube (CRT), a liquid crystal display (LCD), a speaker, and the like; the storage part 808 including a hard disk and the like; and a communication part 809 including a network interface card such as a local area network (LAN) card and a modem. The communication part performs communication processing through a network such as the Internet. A driver is also connected to the I/O interface 805 as required. A removable medium 811, for example, a magnetic disk, an optical disk, a magneto-optical disk and a semiconductor memory, is installed on the driver 810 as required, so that a computer program read therefrom is installed in the storage part 808 as required.

Particularly, according to the embodiments of the present application, the processes described above with reference to the flowcharts may be implemented as computer software programs. For example, an embodiment of the present application includes a computer program product, including a computer program carried on a computer-readable storage medium. The computer program includes a computer program for performing the methods shown in the flowcharts. In this embodiment, the computer program may be downloaded from the network and installed through the communication part 809 and/or installed from the removable medium 811. When the computer program is executed by the CPU 801, functions defined in the system of the present application are performed.

It should be noted that the computer-readable medium shown in this embodiment of the present application may be a computer-readable signal medium, a computer-readable storage medium, or any combination thereof. The computer-readable storage medium may be, for example, an electrical, magnetic, optical, electromagnetic, infrared, or semiconductor system, apparatus, or device, or any combination thereof. More specific examples of the computer-readable storage medium may include but are not limited to an electrical connection with one or more wires, a portable computer diskette, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof. In the present application, the computer-readable signal medium may include a data signal that is propagated in baseband or as part of a carrier wave, in which computer-readable program code is carried. Such a propagated signal may be in a variety of forms, including but not limited to, an electromagnetic signal, an optical signal, or any appropriate combination thereof. The computer-readable signal medium may alternatively be any computer-readable medium except for the computer-readable storage medium, and that computer-readable medium can send, propagate, or transmit a program for use by or in combination with an instruction execution system, apparatus, or device. The computer program contained in the computer-readable medium may be transmitted with any appropriate medium, including but not limited to a wireless connection, a wired connection, or any appropriate combination thereof.

The flowcharts and the block diagrams in the drawings illustrate possible system architectures, functions, and operations of the system, the method, and the computer program product according to various embodiments of the present application. Each box in a flowchart or a block diagram may represent a module, a program segment, or a part of code. The module, the program segment, or the part of code includes one or more executable instructions used for implementing designated logic functions. It should also be noted that in some alternative implementations, the functions marked in the boxes may be realized in a sequence different from those marked in the drawings. For example, actually two boxes shown in succession may be performed basically in parallel, and sometimes the two boxes may be performed in a reverse sequence. This is determined by a related function. It should also be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and computer instructions.

In the drawings corresponding to the foregoing embodiments, a connecting line may represent a connection relationship between components to represent more constituent signal paths (constituent signal path), and/or one or more ends of some lines are arrowed to represent a main information flow direction. As an identifier, the connecting line is not a limitation on the solution but combines one or more exemplary embodiments. Using these lines helps connect a circuit or a logical unit more easily. Any represented signal (determined by a design requirement or a preference) may actually include one or more signals that can be sent in any direction and implement with a signal solution of any appropriate type.

Describing the unit involved in the embodiments of the present application may be implemented by software, or may be implemented by hardware. The described unit may also be disposed in the processor. The name of the unit does not form any limitation on the unit in some cases.

Another aspect of the present application further provides a computer-readable storage medium. A computer program is stored on the computer-readable storage medium. When the computer program is executed by a processor, the foregoing method is implemented. The computer-readable storage medium may be included in the electronic device described in the foregoing embodiment, or may be independent and not assembled in the electronic device.

It should be noted that although a plurality of modules or units of a device for action execution are mentioned in the foregoing detailed description, such division is not mandatory. In practice, according to the implementations of the present application, features and functions of two or more modules or units described above may be embodied in one module or unit. Conversely, a feature and a function of one module or unit described above may further be divided into a plurality of modules or units to be embodied.

Through the above description about the implementations, it is easily understood by a person skilled in the art that the exemplary implementations described herein may be implemented by software, or may be implemented by combining the software and necessary hardware. Therefore, the technical solution according to the implementations of the present application may be embodied in a form of a software product. The software product may be stored in a non-volatile storage medium (which may be a CD-ROM, a USB flash disk, a mobile hard disk, and the like) or a network, including a plurality of instructions enabling a computing device (which may be a personal computer, a server, a touch terminal, a network device, or the like) to perform the method according to the implementations of the present application.

It should be noted that the present application can be used for numerous general or dedicated computing system environments or configurations, for example, a personal computer, a server computer, a handheld device or a portable device, a flat panel device, a multi-processor system, a microprocessor-based system, a set-top box, a programmable consumer electronic device, a network PC, a minicomputer, a mainframe computer, and a distributed computing environment including any one of the foregoing systems or devices.

A person skilled in the art can easily figure out another implementation solution of the present application after considering the specification and practicing the implementations disclosed herein. The present application is intended to cover any variations, functions, or adaptive changes of the present application. These variations, functions, or adaptive changes comply with general principles of the present application, and include common knowledge or commonly used technical means in the technical field that is not disclosed in the present application.

It should be understood that the foregoing content is merely the preferred exemplary embodiment of the present application and not intended to limit the implementation solution of the present application. A person of ordinary skill in the art can conveniently perform corresponding variation or modification based on the main concept and spirit of the present application. Therefore, the protection scope of the present application should be subject to the protection scope of the claims.

## Claims

1. An orchestration instruction management method, comprising:
obtaining service information of a target head unit, and determining a service execution time sequence and an incoming parameter based on the service information;
encoding the service execution time sequence and the incoming parameter according to a preset instruction orchestration protocol, to generate an orchestration instruction in a fixed information arrangement mode; and
transmitting the orchestration instruction to an embedded platform based on a preset orchestration instruction interface, and decoding the orchestration instruction to perform service execution according to the orchestration instruction.

2. The orchestration instruction management method according to claim 1, wherein after the transmitting the orchestration instruction to an embedded platform based on a preset orchestration instruction interface, the orchestration instruction management method further comprises:
checking the orchestration instruction according to the preset instruction orchestration protocol; and
if a format of the orchestration instruction is incorrect, generating error information based on the fact that the format of the orchestration instruction is incorrect, and correcting the orchestration instruction based on the error information.

3. The orchestration instruction management method according to claim 2, wherein after the checking the orchestration instruction according to the preset instruction orchestration protocol, the orchestration instruction management method further comprises:
if the format of the orchestration instruction is correct, determining a type of the orchestration instruction, the type of the orchestration instruction comprising a real-time instruction, a permanent instruction, and a time-limited instruction; and
if the type of the orchestration instruction is the real-time instruction, performing service execution according to the orchestration instruction; or
if the type of the orchestration instruction is the permanent instruction or the time-limited instruction, storing the orchestration instruction to a preset orchestration instruction storage partition, to invoke and execute the permanent instruction or the time-limited instruction based on an execution condition.

4. The orchestration instruction management method according to claim 3, wherein the invoking and executing the permanent instruction or the time-limited instruction based on the execution condition comprises:
if the orchestration instruction is the permanent instruction, determining a trigger condition of the orchestration instruction according to the preset instruction orchestration protocol and the orchestration instruction; and
reading the orchestration instruction in response to the trigger condition, and performing service execution according to the orchestration instruction.

5. The orchestration instruction management method according to claim 3, wherein the invoking and executing the permanent instruction or the time-limited instruction based on the execution condition further comprises:
if the orchestration instruction is the time-limited instruction, determining a trigger condition and expiration time of the orchestration instruction according to the preset instruction orchestration protocol and the orchestration instruction;
reading the orchestration instruction in response to the trigger condition, and performing service execution according to the orchestration instruction; and
if current time is consistent with the expiration time, deleting the orchestration instruction from the preset orchestration instruction storage partition.

6. The orchestration instruction management method according to claim 1, wherein the encoding the service execution time sequence and the incoming parameter according to a preset instruction orchestration protocol, to generate an orchestration instruction in a fixed information arrangement mode comprises:
determining a service execution parameter type comprised in the incoming parameter;
determining a type of the orchestration instruction based on the service execution parameter type, and determining an instruction number of the orchestration instruction based on the service execution time sequence; and
performing orchestration instruction encoding on the instruction number, the incoming parameter, and the type of the orchestration instruction according to the preset instruction orchestration protocol, to obtain the orchestration instruction in the fixed information arrangement mode.

7. The orchestration instruction management method according to claim 6, wherein the service execution parameter type comprises a trigger condition parameter, an expiration date parameter, and an execution content parameter, and the determining a type of the orchestration instruction based on the service execution parameter type comprises any one of the following:
if the service execution parameter type comprises the execution content parameter, determining that the type of the orchestration instruction is a real-time instruction;
if the service execution parameter type comprises the execution content parameter and the trigger condition parameter, determining that the orchestration instruction is a permanent instruction; or
if the service execution parameter type comprises the trigger condition parameter, the expiration date parameter, and the execution content parameter, determining that the orchestration instruction is a real-time instruction.

8. The orchestration instruction management method according to claim 6, wherein after the performing orchestration instruction encoding on the instruction number, the incoming parameter, and the type of the orchestration instruction according to the preset instruction orchestration protocol, to obtain the orchestration instruction in the fixed information arrangement mode, the orchestration management method further comprises:
if there are a plurality of orchestration instructions, determining a current instruction length of the orchestration instruction; and
determining a byte length difference between the current instruction length and an expected instruction length, and performing byte stuffing on the orchestration instruction based on the byte length difference by using a preset stuffing byte, to make the orchestration instructions consistent in instruction length, the preset stuffing byte being byte data of no executive meaning and being used for stuffing the orchestration instruction, and the expected instruction length being greater than or equal to the current instruction length.

9. The orchestration instruction management method according to any one of claims 1 to 8, wherein after the performing service execution according to the orchestration instruction, the orchestration instruction management method further comprises:
monitoring an execution status of the orchestration instruction in response to an instruction execution status query request, the execution status comprising unexecuted, in execution, failing in execution, and successfully executed; and
generating an execution status feedback text based on the execution status, and displaying the execution status feedback text on a client.

10. An orchestration instruction management apparatus, comprising:
an instruction information obtaining module, configured to obtain service information of a target head unit, and determine a service execution time sequence and an incoming parameter based on the service information;
an instruction generation module, configured to encode the service execution time sequence and the incoming parameter according to a preset instruction orchestration protocol, to generate an orchestration instruction in a fixed information arrangement mode; and
an instruction execution module, configured to transmit the orchestration instruction to an embedded platform based on a preset orchestration instruction interface, and decode the orchestration instruction to perform service execution according to the orchestration instruction.

11. An electronic device, comprising:
one or more processors; and
a storage apparatus, configured to store one or more programs, wherein when the one or more programs are executed by the one or more processors, the electronic device is enabled to implement the orchestration instruction management method according to any one of claims 1 to 9.

12. A computer-readable storage medium, wherein computer-readable instructions are stored on the computer-readable storage medium, and when the computer-readable instructions are executed by a processor of a computer, the computer is enabled to perform the orchestration instruction management method according to any one of claims 1 to 9.
